Europäisches Patentamt

European Patent Office

Office européen des brevets

(11) Veröffentlichungsnummer: **0 197 024**
**B1**

# (12) EUROPÄISCHE PATENTSCHRIFT

(45) Veröffentlichungstag der Patentschrift:
31.10.90

(51) Int. Cl.⁵: **C02F 3/06, C02F 3/10**

(21) Anmeldenummer: 86890077.0

(22) Anmeldetag: 25.03.86

(54) Vorrichtung zur aeroben biologischen Abwasserreinigung.

(30) Priorität: 29.03.85 AT 946/85

(43) Veröffentlichungstag der Anmeldung:
08.10.86 Patentblatt 86/41

(45) Bekanntmachung des Hinweises auf die Patenterteilung:
31.10.90 Patentblatt 90/44

(84) Benannte Vertragsstaaten:
CH DE FR GB IT LI SE

(56) Entgegenhaltungen:
DE-A- 2 815 866
DE-A- 2 905 391
US-A- 4 200 533

(73) Patentinhaber: Renner, Helmut, Dipl. Ing. Dr. techn.,
Neusitzstrasse 22, A-8044 Weinitzen(AT)

(72) Erfinder: Renner, Helmut, Dipl. Ing. Dr. techn.,
Neusitzstrasse 22, A-8044 Weinitzen(AT)

(74) Vertreter: Barger, Erich et al, Patentanwälte Dipl.-Ing.
Erich Barger Dipl.-Ing. Hermann Krick Biberstrasse 15,
A-1010 Wien(AT)

ACTORUM AG

## Beschreibung

Die Erfindung bezieht sich auf eine Vorrichtung zur aeroben, biologischen Abwasserreinigung, bei der die Bewuchsflächen für die Mikroorganismen aus einer für Gase durchlässigen, für Wasser undurchlässigen Membran gebildet sind, die einerseits vom Abwasser benetzt und anderseits von Luft beaufschlagt ist, wobei die Membran von einer der Luftzufuhr dienenden Stützeinrichtung getragen ist.

Bei der durch die GB-A 2 075 547 bekannt gewordenen Vorrichtung wird die Membran durch ein über einen Rahmen gespanntes Netz unterstützt. Tauchen die so gebildeten Platten tiefer ins Wasser ein, so ist der Flüssigkeitsdruck so groß, daß die Gefahr einer starken Durchbiegung des Netzes gegeben ist. Um dies zu verhindern, muß eine hohe Spannkraft für das Netz vorhanden sein, was wiederum eine kräftige Ausbildung des Rahmens erforderlich macht. Dadurch wird der bekannte Aufbau der Platten für größere Abmessungen und größere Eintauchtiefen zu aufwendig in der Herstellung und im Platzbedarf.

Die Erfindung bezweckt eine Vorrichtung zu schaffen, bei der der technische Aufwand geringer als bei der bekannten Einrichtung ist.

Erfindungsgemäß wird dies dadurch erreicht, daß die Stützeinrichtung ein Stützkörper ist, der aus einem grobporösen, zum ungehinderten Luftaustausch zwischen dem Inneren des Körpers und der Außenluft dienenden freie Zwischenräume aufweisenden, Material besteht.

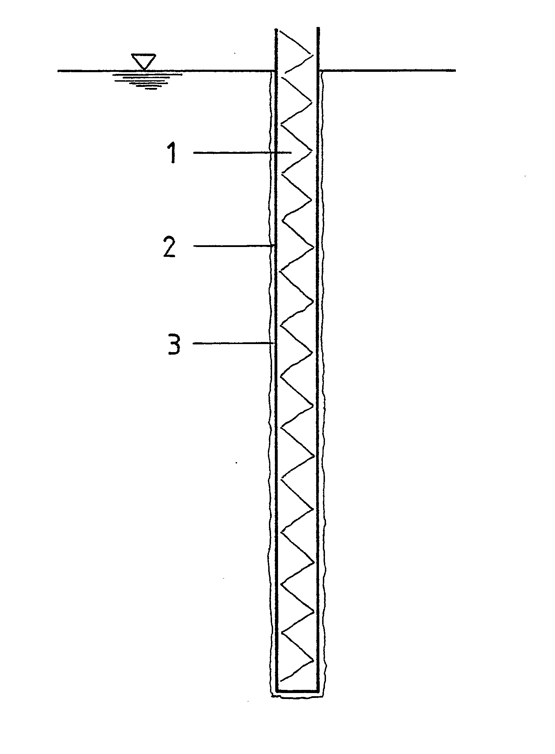

In der Zeichnung ist der Gegenstand der Erfindung in einer beispielsweisen Ausführungsform dargestellt.

Ein Stützkörper 1 aus porösem Material ist mit einer Membranfolie 2 umhüllt. Diese Umhüllung ist nicht allseitig, da die Oberseite des Stützkörpers in direkter Verbindung mit der Luft stehen muß, um durch seine Poren hindurch der Folie Luft zuzuführen. Die Folie ist so beschaffen, daß sie für Sauerstoff durchlässig, für Wasser dagegen nicht durchlässig ist. Folien dieser Art sind bekannt.

Wird die Platte in das zu reinigende Wasser getaucht, so bildet sich auf der Außenfläche der Folie ein Bakterienbewuchs 3, dem für das Leben der aeroben Bakterien der nötige Sauerstoff diffundierend aus dem Inneren des Stützkörpers zur Verfügung gestellt wird.

Das Material des Stützkörpers soll so beschaffen sein, daß möglichst große freie Zwischenräume vorhanden sind, damit ein ungehinderter Luftaustausch zwischen dem Inneren des Körpers und der Außenluft möglich ist.

Die Dicke des porösen Stützkörpers liegt im Bereich von einigen Zentimetern und ist von der Größe der Bewuchsflächen abhängig, um einen sicheren Luftwechsel zu gewährleisten. Bei einer Eintauchtiefe von mehr als etwa einem halben Meter kann es bei geringer Dicke des Stützkörpers notwendig sein, den Luftwechsel durch ein Gebläse od.dgl. zu verstärken. Um Energie zu sparen, wird jedoch eine entsprechende Dimensionierung des Stützkörpers bevorzugt.

Der Querschnitt der Stützkörper ist grundsätzlich ohne Bedeutung. Zweckmäßigerweise soll aber der Körper eine flache, plattenartige Form erhalten, damit die für den Bakterienaufwuchs und die Sauerstoffdiffusion vorhandene Fläche möglichst groß ist.

Nach den bisherigen Versuchen dürfte die erforderliche Bewuchsfläche für jeden an der erfindungsgemäßen Vorrichtung angeschlossenen Einwohnergleichwert etwa 5 bis 10 m² betragen. Dies entspricht einer Bewuchsfläche von etwa 35 bis 70m² je 1 m³ Abwasser pro Tag.

Eine erfindungsgemäß gebaute Abwasserreinigungsanlage arbeitet in gleicher Weise wie ein Abwasserteich ohne maschinelle Einrichtungen und ohne Energiezufuhr. Da aber als Bewuchszone nicht nur die Sohle und die Wände des Beckens und für den Sauerstoffeintrag nicht nur die freie Wasseroberfläche zur Verfügung stehen, kann die Anlage wesentlich höher belastet werden, als eine Teichanlage, so daß der Raumbedarf gering ist.

## Patentansprüche

Vorrichtung zur aeroben, biologischen Abwasserreinigung, bei der die Bewuchsflächen für die Mikroorganismen aus einer für Gase durchlässigen, für Wasser undurchlässigen Membran gebildet sind, die einerseits vom Abwasser benetzt und anderseits von Luft beaufschlagt ist, wobei die Membran von einer der Luftzufuhr dienenden Stützeinrichtung getragen ist, dadurch gekennzeichnet, daß die Stützeinrichtung ein Stützkörper (1) ist, der aus einem grobporösen, zum ungehinderten Luftaustausch zwischen dem Inneren des Körpers und der Außenluft dienenden freie Zwischenräume aufweisenden, Material besteht.

## Claims

A device for aerobic biological waste water purification, in which the culture surfaces for the microorganisms are formed from a membrane which is permeable to gases but impermeable to water and one side of which is exposed to air, the membrane being carried by a support device serving for the air supply, characterised in that the support device is a support member (1) which consists of a coarse-porosity material having free interstices for the unobstructed air exchange between the interior of the member and the external air.

## Revendications

Dispositif pour l'épuration biologique aérobie des eaux usées, dans lequel les surfaces de croissance pour les microorganismes sont formées par une membrane perméable aux gaz et imperméable à l'eau qui, d'une part, est mouillée par les eaux usées et qui, d'autre part, subit une injection d'air, la membrane étant portée par un dispositif de support qui sert à l'introduction de l'air, caractérisé en ce que le dispositif de support est un corps de support (1) qui consiste en un matériau à pores grossiers qui présente des interstices libres servant à un échange d'air non entravé entre l'intérieur du corps et l'air extérieur.

1

2

3